# EUROPÄISCHE PATENTSCHRIFT

(11) **EP 2 962 207 B1**
(45) Veröffentlichungstag und Bekanntmachung des Hinweises auf die Patenterteilung: **01.04.2020**
(21) Anmeldenummer: 14705099.1
(22) Anmeldetag: 12.02.2014
(51) Int. Cl.: G06F 12/14

(54) **VERFAHREN UND SCHALTUNGSANORDNUNG FÜR KONTROLLIERTE ZUGRIFFE AUF SLAVE-EINHEITEN IN EINEM EIN-CHIP-SYSTEM**
METHOD AND CIRCUIT ARRANGEMENT FOR ACCESSING SLAVE UNITS IN A SYSTEM ON CHIP IN A CONTROLLED MANNER
PROCÉDÉ ET DISPOSITIF DE COMMUTATION POUR DES ACCÈS CONTRÔLÉS À DES UNITÉS ESCLAVES DANS UN SYSTÈME MONOPUCE

(30) Priorität: 28.02.2013 DE 102013203365
(43) Veröffentlichungstag der Anmeldung: 06.01.2016
(73) Patentinhaber: Siemens Aktiengesellschaft, 80333 München (DE)
(72) Erfinder: EPPENSTEINER, Friedrich, A-3620 Spitz (AT); GHAMESHLU, Majid, A-1110 Wien (AT); HAHN, Ulrich, 91413 Neustadt/A. (DE); TAUCHER, Herbert, A-2340 Mödling (AT)
(74) Vertreter: Maier, Daniel Oliver
(86) Internationale Anmeldenummer: PCT/EP2014/052702
(87) Internationale Veröffentlichungsnummer: WO 2014/131618

(56) Entgegenhaltungen:
- EP-A2- 1 914 637
- US-A1- 2008 114 906
- US-A1- 2009 089 861
- US-A1- 2011 191 562

## Beschreibung

### Technisches Gebiet

Die vorliegende Erfindung betrifft allgemein das Gebiet der der elektronischen und logischen Schaltungen, insbesondere der so genannten anwendungsspezifischen, integrierten Schaltungen oder ASICs. Im Speziellen bezieht sich die vorliegende Erfindung auf ein Verfahren für einen kontrollierten Zugriff auf Slave-Einheiten in einem so genannten Ein-Chip-System sowie eine zugehörige Schaltungsanordnung. Dabei weist die Schaltungsanordnung zumindest eine Mastereinheit, mehrere untergeordnete Slave-Einheiten sowie ein so genanntes Network-on-Chip-Bussystem oder NoC auf. Ein Zugriff einer Mastereinheit auf eine Slave-Einheit erfolgt dabei mittels einer Zugriffsadresse über das Network-on-Chip-Bussystem.

### Stand der Technik

Logische bzw. elektronische Schaltungen, welche insbesondere als so genannte integrierte Schaltungen realisiert sind, bilden heutzutage die Grundlage für jegliche Elektronik, insbesondere in der Computertechnik. Üblicherweise bestehen derartige elektronische Schaltungen bzw. Systeme aus auf einem einzelnen Substrat (z.B. Halbleitersubstrat, etc.) untergebrachten und miteinander verdrahteten elektronischen Bauelementen bzw. elektronischen Schaltkreisen oder so genannten Integrated Circuits (ICs). Eine integrierte Schaltung besteht damit aus einer großen Anzahl von verschiedenartigen Bauelementen sowie verbindenden Leiterzügen auf oder in einem einkristallinen Substrat. Erst durch diese Integration ist es möglich, umfangreiche Funktionalitäten und Anwendungen auf einem kleinen Raum zur Verfügung zu stellen. Durch integrierte Schaltungen wird eine Vielzahl von Anwendungen (z.B. in mobilen Geräten, SIM-Karten, RFIDs, Mobiltelefonen, etc.) erst technisch realisierbar, da diese Anwendungen sonst oft zu teuer, zu komplex, zu leistungsintensiv oder zu groß (z.B. für einen Einbau in das jeweilige Gerät, etc.) wären. Werden derartige logische bzw. integrierte Schaltungen für spezielle Anwendungen erstellt, so werden diese Schaltungen auch als anwendungsspezifische, integrierte Schaltungen oder als application-specific integrated circuit bzw. kurz als ASICs bezeichnet.

Eine Verkleinerung von Geräten und ein ständig steigender Integrationsgrad haben dazu geführt, dass mittlerweile ganze Systeme z.B. mit Prozessoren, Controllern, Speicherbausteinen (z.B. RAMs, ROMs, etc.), Power-Management und anderen Komponenten auf einem so genannten Chip oder Die untergebracht werden. Derartige Systeme werden auch als Ein-Chip-Systeme oder System-on-Chip (SoC) bezeichnet und vor allem im Mobilfunkbereich, für Embedded Computer, Smartphones, CD- und DVD-Geräte und überall dort bei Anwendungen eingesetzt, wo kleine Abmessungen bei relativ hoher Leistung und vielfältige Aufgaben gefragt sind.

Bei einem System-on-Chip (SoC) oder Ein-Chip-System sind alle oder ein großer Teil der Funktionen des Systems auf dem Chip integriert - d.h. in einem integrierten Schaltkreis auf einem Halbleiter-Substrat. Üblicherweise werden heutzutage System-on-Chips bzw. Ein-Chip-Systeme nicht mehr komplett neu entwickelt, sondern Entwürfe basieren zumindest teilweise auf bereits vorhandenen und/oder zugekauften Komponenten - so genannten IP-Core-Einheiten oder IP-Blöcke (z.B. Prozessor, Controller-Einheiten, Peripherieblöcke, etc.). Diese IP-Blöcke werden z.B. als fertige Einheit oder mittels Design-Lizenzen erworben und dann in einem neuen Ein-Chip-System direkt oder in angepasster Form verwendet. Fehlende Einheiten für das Ein-Chip-System können dann für z.B. den fertigen ASIC dazu entwickelt werden.

Verbunden werden die Einheiten eines derartigen Ein-Chip-Systems intern über ein so genanntes Bussystem. Häufig werden - insbesondere bei komplexen Ein-Chip-Systemen - hierarchische oder zumindest segmentierte Bussysteme eingesetzt. Derartige Bussysteme können z.B. einen schnellen Systembus, einen langsameren Peripheriebus sowie einen Register- bzw. Steuerbus umfassen. Ein Ansatz, flexible und effiziente Kommunikationsverbindungen zwischen IP-Blöcken (z.B. Prozessor, Controller-Einheiten, Peripherieblöcke, etc.) eines Ein-Chip-Systems zu designen, ist das so genannte Network-on-Chip-Bussystem oder NoC. Bei einem Network-on-Chip-Bussystem werden die Informationen zwischen den einzelnen IP-Blöcken wie z.B. Prozessoren, Speicherelementen, Controllern, Peripherieeinheiten, etc. des Ein-Chip-Systems nicht über einen internen Bus ausgetauscht, sondern über einen geschichtete Bus-Architektur, welche wie ein Netzwerk mit Verteilerstellen konzipiert ist. Dabei können Informationen bzw. Zugriffe von einer Komponente auf eine andere Komponente des Ein-Chip-Systems auf einem Weg von einer Quell- zu einer Empfangskomponente beispielsweise als Punkt-zu-Punkt- oder als Mehrwegverbindung über mehrere Links geschaltet werden - wie z.B. bei einem so genannten Routing in einem paketvermittelten Netzwerk. Die Informationsweiterleitung bzw. der Zugriff von der Quell- zur Empfangskomponente erfolgt dabei z.B. mittels einer Zugriffsadresse, welche für das Routing herangezogen wird.

Häufig wird für eine Organisation und Verteilung von Zugriffen, Aufgaben, etc. zwischen verschiedenen Komponenten eines Ein-Chip-Systems das so genanntes Master-Slave-Konzept angewendet. Auf diese Weise werden die jeweiligen Aufgaben zwischen übergeordneten Komponenten - so genannten Mastereinheiten - und untergeordneten Komponenten - so genannten Slave-Einheiten - verteilt und eine Verwaltung des Zugriffs auf gemeinsame Ressourcen (z.B. Speichereinheiten, etc.) geregelt. Ein Master-Slave-Konzept wird vorzüglich dann eingesetzt, wenn von einer oder mehreren Komponenten wie z.B. Prozessoren, Controller, etc. eine Steuerung und eine Aufgabenverteilung von anderen Komponenten (z.B. Spezialprozessoren, Peripherieeinheiten, etc.) übernommen oder Zugriffe auf andere Komponenten (z.B. Speichereinheiten, Bussysteme, etc.) geregelt werden.

Ein-Chip-Systeme unterliegen nicht selten hohen Sicherheitsanforderungen, daher ist es notwendig Zugriffe bzw. Zugriffsberechtigungen von Mastereinheiten auf Slave-Einheiten zu kontrollieren, um berechtigte Zugriffe zu verhindern. Bei am Markt üblicherweise erhältliche Central-Processing-Unit-Komponenten bzw. CPUs für Ein-Chip-Systeme ist beispielsweise für eine Zugriffskontrolle eine so genannte Memory Management Unit (MMU) oder Memory Protection Unit (MPU) integriert. Von der MMU oder von der MPU werden neben anderen Aufgaben auch Speicherschutzaufgaben geregelt. Auf diese Weise können einzelne Speicherbereiche oder Zugriffe auf Slave-Einheiten z.B. für ein Ausführen von Code oder für ein Beschreiben, etc. durch die jeweilige CPU gesperrt werden.

Allerdings weisen Ein-Chip-Systeme üblicherweise neben zumindest einer CPU noch weitere Master-Einheiten auf, von welchen auf die Slave-Einheiten des Ein-Chip-Systems zugegriffen wird. Der so genannte Direct Memory Access (DMA) ist dabei eine Zugriffsart, bei welcher über das Bussystem (z.B. NoC) von einer Mastereinheit (z.B. Peripherieeinheit, etc.) direkt auf eine Slave-Einheit oder eine Speichereinheit unabhängig von der CPU zugegriffen wird. Dabei wird allerdings derzeit keine Kontrolle der Zugriffe durch andere IP-Komponenten (z.B. Prozessor, etc.) des Ein-Chip-Systems durchgeführt. So können beispielsweise unautorisierte Zugriffe auf Slave-Einheiten mittels DMA durchgeführt werden und damit ein Sicherheitsrisiko darstellen.

Aus der Schrift EP 2 461 251 A1 ist beispielsweise ein Verfahren bekannt, um einen Zugriff auf eine Speichereinheit zu kontrollieren. Dabei wird jeder Prozessoreinheit einen Speicherschutzeinheit zugeordnet, durch welche dann über einen Systembus eine Verbindung zur Speichereinheit hergestellt wird. Der Zugriff einer Prozessoreinheit auf die Speichereinheit wird dann immer über die Speicherschutzeinheit durchgeführt, wobei die Zugriffe der Prozessoren unterschiedliche Zugriffsberechtigungen ausweisen bzw. Speicherbereiche für bestimmte Anwendungen der Prozessoren gesperrt sein können. Bei dem Verfahren gemäß der Schrift EP 2 461 251 A1 werden dann die Zugriffe durch einen Prozessor von zwei Zugriffskontrolleinheiten der jeweils zugehörigen Speicherschutzeinheit geprüft und nur dann zugelassen, wenn der Zugriff von beiden Zugriffskontrolleinheiten als berechtigt betrachtet wird. Dabei sind z.B. in einer ersten Zugriffskontrolleinheit der Speicherschutzeinheit Informationen abgelegt, welche Anwendungen des Prozessor auf welchen Speicherbereich zugreifen dürfen, und in einer zweiten Zugriffskontrolleinheit der Speicherschutzeinheit sind dann die entsprechenden Zugriffsarten bzw. -berechtigungen (z.B. Schreib-/Lesezugriff, Lesezugriff, etc.) hinterlegt. Damit weist das in der Schrift EP 2 461 251 A1 offenbarte Verfahren den Nachteil auf, dass für einen kontrollierten Zugriff auf die Speichereinheit ein großer Aufwand - insbesondere in der Programmierung der Zugriffskontrolleinheiten der Speicherschutzeinheiten - notwendig ist. Jede Speicherschutzeinheit muss getrennt und speziell entsprechend der Anwendungen des zugehörigen Prozessors programmiert werden. Weiterhin führt die doppelte Überprüfung eines Zugriffs durch zwei Zugriffskontrolleinheiten zu einer Zeitverzögerung beim Zugriff des Prozessors, welche ebenfalls berücksichtigt werden muss.

Eine weitere Möglichkeit eine Kontrolle von Zugriffen auf Slave-Einheiten in einem Ein-Chip-System zu ermöglichen, ist beispielsweise einen Integration einer MPU- oder Speicherschutzfunktionalität in das jeweils eingesetzt Bussystem - z.B. in das Network-on-Chip-Bussystem. Diese Vorgehensweise weist allerdings den Nachteil auf, dass dadurch die Funktionalität des Bussystems erweitert werden muss. Dies ist nicht selten mit großem Aufwand verbunden, da beispielsweise auch Network-on-Chip-Bussysteme für Ein-Chip-Systeme als so genannten IP-Komponenten zugekauft werden können und dann z.B. speziell mit der Speicherschutzfunktion ergänzt werden müssen. Gegebenenfalls kann diese Funktionserweiterung dann zusätzlich zu Zeitverzögerungen bei Zugriffen oder einer Verlängerung der Zugriffszeit führen, welche die Performance des Ein-Chip-Systems erheblich beeinträchtigen können.

US 2009/0089861 A1 offenbart ein Verfahren gemäß dem Oberbegriff des Anspruchs 1.

### Darstellung der Erfindung

Der Erfindung liegt daher die Aufgabe zugrunde, ein Verfahren sowie eine Schaltanordnung anzugeben, durch welche auf einfache Weise ohne zusätzlichen Aufwand kontrollierte Zugriffe auf Slave-Einheiten in einem Ein-Chip-System mit einer sehr geringen oder keiner Zugriffsverzögerungszeit ermöglicht werden.

Diese Aufgabe wird durch ein Verfahren sowie durch eine Schaltanordnung der eingangs genannten Art mit den Merkmalen gemäß den unabhängigen Patentansprüchen gelöst. Vorteilhafte Ausführungsformen der vorliegenden Erfindung sind in den abhängigen Ansprüchen beschrieben.

Erfindungsgemäß erfolgt die Lösung der Aufgabe mit einem Verfahren der eingangs erwähnten Art, bei welchem zwischen der zumindest einen Mastereinheit und dem Network-on-Chip-Bussystem eine Speicherschutzeinheit integriert wird. Von dieser Speicherschutzeinheit wird dann eine Zugriffsberechtigung der zumindest einen Mastereinheit auf die zumindest eine Slave-Einheit durch Vergleich einer Zugriffsadresse mit vorgegebenen Adressbereichen geprüft. Bei Identifikation eines unberechtigten Zugriffs der zumindest einen Mastereinheit auf die zumindest eine Slave-Einheit die Zugriffsadresse durch die Speicherschutzeinheit derart modifiziert wird, dass dieser unberechtigte Zugriff im Network-on-Chip-Bussystem beendet wird.

Der Hauptaspekt des erfindungsgemäß vorgeschlagenen Verfahrens besteht darin, dass ohne zusätzlichen Aufwand wie z.B. Anpassungen an als Mastereinheiten verwendeten IP-Blöcken Zugriffe von in einem Ein-Chip-System eingesetzten Mastereinheiten auf Slave-Einheiten dieses Ein-Chip-Systems kontrolliert werden können. Unberechtigte Zugriffe auf z.B. so genannte Read-Only-Bereiche von Slave-Einheiten bzw. Speichereinheiten oder auf gesperrte Slave-Einheiten bzw. Speicherbereiche durch eine Mastereinheit können auf diese Weise sehr einfach und ohne großen Aufwand verhindert werden. Es besteht auch keine Notwendigkeit beispielsweise das verwendete Network-on-Chip-System mit zusätzlichen Kontrollfunktionalitäten zu erweitern, um unberechtigte Zugriffe zu erkennen und zu verhindern. Weiterhin wird durch das erfindungsgemäße Verfahren - insbesondere durch eine gegebenenfalls durchgeführte Modifikation der Zugriffsadresse - eine zusätzliche Latenz oder Zeitverzögerung eines Zugriffs durch die Überprüfung in der Speicherschutzeinheit möglichst gering gehalten bzw. keine zusätzliche Latenz oder Zeitverzögerung erzeugt. Das bedeutet, es kommt durch das erfindungsgemäße Verfahren kaum zu einer Erhöhung oder zu keiner Erhöhung bei den Zugriffzeiten der zumindest einen Mastereinheit auf die zumindest eine Slave-Einheit des Ein-Chip-Systems und die Leistung und Effizienz des Ein-Chip-Systems wird damit nicht beeinträchtigt.

Es ist vorteilhaft, wenn für unberechtigte Zugriffe der zumindest einen Mastereinheit die Zugriffsadresse auf einen für diese Mastereinheit unbenutzten Adressbereich des Network-on-Chip-Bussystems abgebildet wird. Ein unbenutzter Adressbereich im Network-on-Chip-System ist für die jeweilige Mastereinheit nicht belegt bzw. es ist diesem Adressbereich im Network-on-Chip-Bussystem keine Adresse einer Slave-Einheit (z.B. Speichereinheit, etc.) für einen Zugriff zugeordnet. Dadurch wird der unberechtigte Zugriff der Mastereinheit im Network-on-Chip-Bussystem terminiert, da der Zugriff an keine Slave-Einheit als Ziel-Einheit weitergeleitet werden kann.

Dabei empfiehlt es sich, dass bei Beendigung eines unberechtigten Zugriffs durch die zumindest eine Mastereinheit des Ein-Chip-Systems auf die zumindest eine Slave-Einheit bzw. eine Slave-Einheit des Ein-Chip-Systems im Network-on-Chip-Bussystem ein so genannter Interrupt ausgesendet wird. Durch den Interrupt wird z.B. einer Steuereinheit oder CPU des Ein-Chip-Systems auf einfache Weise eine Unterbrechung bzw. Beendigung des Zugriffs der jeweiligen Mastereinheit auf eine Slave-Einheit mitgeteilt. Durch einen Interrupt kann beispielsweise eine Synchronisierung der Steuereinheit bzw. CPU des Ein-Chip-Systems mit nicht-periodischen, unvorhersehbaren Ereignissen wie z.B. einer vorzeitigen Beendigung eines Zugriffs einer Mastereinheit auf einen Slave-Einheit oder einen Speicherbereich, etc. durchgeführt werden. Der Interrupt, in welchem auch ein so genannter Indizien-Register inkludiert sein kann, wird dann von der CPU abgearbeitet und es kann dann beispielsweise sehr rasch eine Bearbeitungen eines Mikroprogramms durch die CPU fortgesetzt werden.

Idealerweise kann die zumindest eine Mastereinheit zumindest für Zugriffe zum Schreiben und/oder Lesen, für Zugriffe nur zum Lesen oder für keine Zugriffe auf die zumindest eine Slave-Einheit berechtigt sein. Ist eine Mastereinheit beispielsweise für schreibende und lesende Zugriffe auf eine Slave-Einheit berechtigt und wird dies in der Speicherschutzeinheit festgestellt, so wird die Zugriffsadresse z.B. unverändert von der Speicherschutzeinheit an das Network-on-Chip-Bussystem weitergeleitet. Ist eine bestimmte Zugriffsart - wie z.B. schreibender Zugriff, lesender Zugriff, etc. - für die jeweilige Mastereinheit bei einer Slave-Einheit oder einem Speicherbereich nicht zugelassen oder ist die jeweilige Slave-Einheit bzw. der jeweilige Speicherbereich für die jeweilige Mastereinheit gesperrt, so wird die Zugriffsadresse von der Speicherschutzeinheit nach Prüfung der Zugriffsberechtigungen modifiziert und dabei auf einen unbenutzten Adressbereich des Network-on-Chip-Bussystems für diese Mastereinheit gemappt.

Dazu werden beispielsweise Zugriffs-Indikationen für die jeweiligen Mastereinheiten des Ein-Chip-Systems, insbesondere die Adressbereiche den Vergleich mit der Zugriffsadresse und damit für Überprüfung der Zugriffsberechtigungen einer Mastereinheit, in mittels Software lesbaren Registern einer Registereinheit der Speicherschutzeinheit abgelegt. Eine Einstellung der Adressbereiche für den Vergleich mit der Zugriffsadresse der Mastereinheiten des Ein-Chip-Systems wird idealer Weise mit Hilfe einer Sicherheitsanwendung wie z.B. mit einer eigenen Sicherheitssoftware durchgeführt.

Eine zweckmäßige Weiterbildung des erfindungsgemäßen Verfahrens sieht dazu vor, dass die Speicherschutzeinheit in einer Initialisierungsphase über eine Registerschnittstelle wie z.B. ein so genanntes Advanced Peripherial Bus-Register Interface durch eine spezielle vertrauenswürdige Konfigurationsmastereinheit konfiguriert wird. Das bedeutet, es werden z.B. in der Initialisierungsphase, in welcher z.B. auch das Ein-Chip-System konfiguriert wird, bei der Speicherschutzeinheit oder gegebenenfalls bei mehreren Speicherschutzeinheiten die Adressbereiche für Vergleich mit Zugriffsadressen in der Registereinheit abgelegt. Dann kann z.B. die Registereinheit für weitere Zugriffe oder Änderungen gesperrt werden.

Alternativ ist es allerdings auch möglich, dass die in der Speichereinheit abgelegten Adressbereiche über eine Registerschnittstelle wie z.B. ein so genanntes Advanced Peripherial Bus-Register Interface unter Verwendung von spezieller Verschlüsselungsinformation konfiguriert und/oder geändert werden. Änderungen mit Hilfe der speziellen Verschlüsselungsinformation (z.B. 32-Bit-Schüssel, etc.) können dann vorteilhafter Weise auch nach einer Initialisierungsphase vorgenommen werden. Damit kann die Speicherschutzeinheit auch entsprechend an Anforderungen z.B. während einer Nutzung des Ein-Chip-Systems angepasst werden.

Weiterhin wird die Aufgabe mit einer Schaltanordnung zur Durchführung des erfindungsgemäßen Verfahrens gelöst. Diese Schaltanordnung, über welche kontrollierte Zugriffe in einem Ein-Chip-System erfolgen können, besteht zumindest aus zumindest einer Mastereinheit, zumindest einer Slave-Einheit sowie einem Network-on-Chip-Busssystem für eine Verbindung zwischen Master- und Slave-Einheiten. Bei der erfindungsgemäßen Schaltanordnung ist zwischen der zumindest einen Mastereinheit und dem Network-on-Chip-Bussystem eine Speicherscutzeinheit integriert. Diese Speicherschutzeinheit ist zum Überprüfen von Zugriffen durch Vergleich von Zugriffsadressen mit vorgegebenen Adressbereichen sowie zum Modifizieren von Zugriffsadressen bei unberechtigten Zugriffen auf die zumindest eine Slave-Einheit durch die zumindest eine Mastereinheit derart ausgestaltet, dass diese unberechtigten Zugriffe im Network-on-Chip-Bussystem blockiert werden.

Die mit der erfindungsgemäßen Schaltanordnung erzielbaren Vorteile bestehen insbesondere darin, dass auf einfache Weise und ohne zusätzlichen Aufwand (z.B. beim Design oder bei einer Entwicklung des Ein-Chip-Systems) unberechtigte Zugriffe von Mastereinheiten auf Slave-Einheiten verhindert werden können. Es ist für die Kontrolle von Zugriffen nicht notwendig, beispielsweise für das Ein-Chip-System als Mastereinheiten verwendete IP-Blöcke bzw. ein verwendetes Network-on-Chip-Bussystem zu verändern, funktionell erweitern oder anzupassen. Weiterhin wird durch die erfindungsgemäße Schaltanordnung die Zugriffs-Latenz bzw. eine Zeitverzögerung eines Zugriffs auf eine Slave-Einheit durch die Überprüfung der jeweiligen Zugriffsberechtigungen möglichst gering gehalten bzw. nicht erhöht. Es ist auch keine Terminierung des Protokolls des Network-on-Chip-Bussystems notwendig, welche eine Wirkung auf Zugriffs-Latenzen hätte, sondern ein unberechtigter Zugriff wird einfach im Network-on-Chip-Bussystem beendet bzw. blockiert.

Die Speicherschutzeinheit besteht in vorteilhafter Weise aus zumindest einer Kontrolllogik für einen Prüfung der Zugriffsadresse, einer Modifikationseinheit für eine Zugriffsadressmodifikation sowie zumindest einer Registereinheit für ein Ablegen der vorgegebenen Adressbereiche bzw. von Zugriffs-Indikationen. Mit der Kontrolllogik können beispielsweise Einstellungen und Signale von der auf eine Slave-Einheit zugreifenden Mastereinheit interpretiert und verarbeitet werden. Es können von der Kontrolllogik dann auch anhand dieser Informationen beispielsweise Überprüfungen von Zugriffsberechtigungen mittels Vergleich einer Zugriffsadresse mit den vorgegebenen Adressbereichen getriggert bzw. durchgeführt werden. Von der Kontrolllogik kann dann auch, wenn ein unberechtigter Zugriff festgestellt wird, eine Modifikation der Zugriffsadresse durch die Modifikationseinheit eingeleitet werden.

In der zumindest einen Registereinheit der Speicherschutzeinheit sind die vorgegebenen Adressbereich für den Vergleich mit der jeweiligen Zugriffsadresse abgelegt und damit die Zugriffs-Indikationen bzw. Zugriffsberechtigungen einer Mastereinheit auf die jeweils im Ein-Chip-System verwendeten Slave-Einheiten bzw. Speicher(-bereiche). Die zumindest eine Registereinheit der Speicherschutzeinheit wie die Speicherschutzeinheit ist vorteilhafter Weise über eine Registerschnittstelle wie z.B. ein so genanntes Advanced Peripherial Bus-Register Interface konfigurierbar. Die Konfiguration kann beispielweise in einer Initialisierungsphase mittels einer speziellen, vertrauenswürdigen Konfigurationsmastereinheit durchgeführt werden. Die Speicherschutzeinheit bzw. die Registereinheit kann dann z.B. für einen Zugriff oder für Änderungen gesperrt sein. Alternativ ist es aber auch möglich, dass insbesondere die Adressbereiche in der zumindest einen Registereinheit mittels Kenntnis von spezieller Verschlüsselungsinformation (z.B. 32-Bit-Schlüssel, etc.) über die Registerschnittstelle geändert werden können. Ohne Kenntnis dieser Verschlüsselungsinformation ist die zumindest eine Registereinheit der Speicherschutzeinheit vor Zugriffen über die Registerschnittstelle gesichert.

### Kurzbeschreibung der Zeichnung

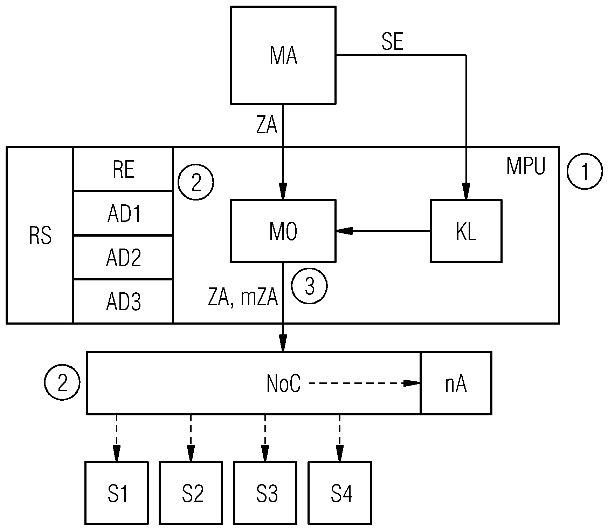

Die Erfindung wird nachfolgend in beispielhafter Weise anhand der beigefügten Figur erläutert. Figur 1 zeigt dabei in beispielhafter und schematischer Weise eine Schaltanordnung zur Durchführung eines Verfahrens für kontrollierte Zugriffe auf zumindest eine Slave-Einheit in einem Ein-Chip-System sowie einen Ablauf dieses erfindungsgemäßen Verfahrens.

### Ausführung der Erfindung

Figur 1 zeigt in schematischer und beispielhafter Weise eine Schaltanordnung zur Durchführung des erfindungsgemäßen Verfahrens für kontrollierte Zugriffe durch zumindest einen Mastereinheit MA auf zumindest eine Slave-Einheit S1, S2, S3, S4 in einem Ein-Chip-System. Die beispielhaft dargestellte Schaltanordnung ist zumindest ein Teil des Ein-Chip-Systems bzw. eines System-on-Chip. Das Ein-Chip-System kann neben der gezeigten Schaltanordnung noch weitere Komponenten bzw. IP-Einheiten umfassen - wie z.B. eine Steuereinheit oder CPU, Ein- und Ausgabeeinheiten, weitere Mastereinheiten (z.B. Co-Prozessoren, etc.). Diese Komponenten bzw. IP-Einheiten sind der Einfachheit allerdings nicht dargestellt.

Die erfindungsgemäße Schaltanordnung besteht zumindest aus einer Mastereinheit MA wie z.B. ein Direct Memory Access einer Peripherieeinheit, eines Controllers, eines Co-Prozessors, etc. sowie aus zumindest einer Slave-Einheit S1, S2, S3, S4. Eine Slave-Einheit S1, S2, S3, S4 kann beispielsweise eine Peripherieeinheit, eine Ein-/Ausgabeeinheit oder eine Speichereinheit bzw. ein Speicherbereich sein. Auf eine Slave-Einheit S1, S2, S3, S4, kann je nach Zugriffsberechtigung von einer Mastereinheit MA z.B. schreibend, lesend oder ausführend zugegriffen werden oder die Slave-Einheit S1, S2, S3, S4 ist für Mastereinheit MA gesperrt. Ein Zugriff der Mastereinheit MA auf eine Slave-Einheit S1, S2, S3, S4 wird unter Verwendung einer Zugriffsadresse ZA über ein Network-on-Chip-Busssystem NoC der Schaltanordnung durchgeführt, welches eine Verbindung zwischen den Komponenten der Schaltanordnung bzw. des Ein-Chip-Systems herstellt. Im Network-on-Chip-Bussystem NoC sind entsprechend Adressen bzw. Adressbereich für Zugriffe auf die Slave-Einheiten S1, S2, S3, S4 belegt. Weiterhin gibt es im Network-on-Chip-Bussystem NoC zumindest einen unbelegte bzw. unbenutzten Adressbereich nA, welcher z.B. für die Mastereinheit MA nicht belegt ist.

Zwischen der zumindest einen Mastereinheit MA und dem Network-on-Chip-System NoC ist bei der erfindungsgemäßen Schaltanordnung eine Speicherschutzeinheit MPU integriert. Die Speicherschutzeinheit MPU weist zumindest eine Kontrolllogik KL, eine Modifikationseinheit MO sowie zumindest eine Registereinheit RE auf. Weiterhin ist auch eine Registerschnittstelle RS wie z.B. ein Advanced Peripherial Bus-Register Interface vorgesehen.

Die Kontrolllogik KL der Speicherschutzeinheit MPU wird beispielsweise für eine Verarbeitung von Einstellungs- und Signalinformationen SE der zumindest einen Mastereinheit MA und zum Anstoßen einer Prüfung der von der Mastereinheit MA übermittelten Zugriffsadressen ZA eingesetzt. Mittels der Modifikationseinheit MO können Zugriffsadressen ZA gegebenenfalls bei einem unberechtigten Zugriff der Mastereinheit MA auf eine Slave-Einheit S1, S2, S3, S4 derart modifiziert werden, dass der Zugriff der Mastereinheit im Network-on-Chip-Bussystem NoC beendet wird. Das heißt, bei Identifikation eines unberechtigten Zugriffs der Mastereinheit MA durch die Speicherschutzeinheit MPU wird die Zugriffsadresse ZA auf eine modifizierte Zugriffsadresse mZA geändert, welche im Network-on-Chip-Bussystem NoC auf den unbenutzten Adressbereich nA des Network-on-Chip-Bussystems NoC gemappt wird.

Für die Identifikation von unberechtigten Zugriffen der Mastereinheit MA sind in der Registereinheit RE der Speicherschutzeinheit MPU vorgegebenen Adressbereiche AD1, AD2, AD3 abgelegt. Diese Zugriffs-Indikationen können beispielweise mittels einer Softwareanwendung z.B. von der Kontrolllogik KL ausgelesen und verarbeitet werden. In den Adressbereichen AD1, AD2, AD3 können beispielsweise in einem ersten Adressbereich AD1 Zugriffs-Indikationen für einen vollen Zugriff (z.B. schreibender und lesender Zugriff) auf die Slave-Einheiten S1, S2, S3, S4, in einem zweiten Adressbereich AD2 Zugriffs-Indikationen für eine eingeschränkten Zugriff (z.B. nur lesender Zugriff) auf die Slave-Einheiten S1, S2, S3, S4 und in einem dritten Adressbereich AD3 Zugriffs-Indikationen für einen gesperrten Zugriff auf die Slave-Einheiten S1, S2, S3, S4 gespeichert sein. Bei einem Zugriff der Mastereinheit MA wird dann die Zugriffsadresse ZA mit den vorgegebenen Adressbereichen AD1, AD2, AD3 verglichen und damit festgestellt, ob eine Zugriff berechtigt oder unberechtigt ist.

Für eine Konfiguration der Speicherschutzeinheit MPU bzw. der Registereinheit ist die Registerschnittstelle RS vorgesehen. Die Konfiguration kann beispielsweise in einer Initialisierungsphase - z.B. bei der Initialisierung des Ein-Chip-Systems, welches eine generische Plattform darstellt und seine Funktionalität z.B. erst mittels einer entsprechenden Konfiguration/Initialisierung erhält - mittels einer speziellen, vertrauenswürdigen Konfigurationsmastereinheit durchgeführt werden. Bei mehreren Speicherschutzeinheiten MPU in einem Ein-Chip-System können beispielsweise die Adressbereiche AD1, AD2, AD3 auf einem Top-Level auf sichere Bereiche gelegt werden. Das bedeutet, dass nach der Konfiguration der jeweiligen Registereinheit RE bzw. jeweiligen Speicherschutzeinheit MPU für Zugriffen bzw. Veränderungen gesperrt ist.

Alternativ besteht auch die Möglichkeit z.B. bei komplexen Ein-Chip-Systemen mit einer Mehrzahl an Speicherschutzeinheiten MPU, dass die in der Registereinheit RE der Speicherschutzeinheit MPU abgelegten Adressbereiche AD1, AD2, AD3 unter Kenntnis und Verwendung von spezieller Verschlüsselungsinformation (z.B. 32-Bit-Schlüssel) über die Registerschnittstelle RS konfiguriert bzw. geändert werden können. Die in der Registereinheit RE gespeicherten Adressbereiche AD1, AD2, AD3 sind dann durch die Verschlüsselungsinformation gesichert und können dann gegebenenfalls mit Hilfe der Verschlüsselungsinformation geändert werden.

Für die Durchführung des erfindungsgemäßen Verfahrens und zum Kontrollieren von Zugriffen der Mastereinheit MA auf eine Slave-Einheit S1, S2, S3, S4 im Ein-Chip-System wird in einem ersten Verfahrensschritt 1 die Speicherschutzeinheit MPU zwischen der Mastereinheit MA und dem Network-on-Chip-Bussystem NoC integriert. Soll von der Mastereinheit MA auf eine Slave-Einheit S1, S2, S3, S4 zugegriffen werden, so wird in einem zweiten Verfahrensschritt 2 einerseits die Einstellungs- und Signalinformationen SE der Mastereinheit MA an die Kontrolllogik KL der Speicherschutzeinheit MPU und andererseits die Zugriffsadresse ZA an die Modifikationseinheit MO der Speicherschutzeinheit MPU übertragen. Von der Speicherschutzeinheit MPU bzw. der Kontrolllogik KL und der Modifikationseinheit MO wird dann im zweiten Verfahrensschritt die Zugriffsadresse ZA mit den vorgegebenen Adressbereichen AD1, AD2, AD3 verglichen. Damit werden die jeweiligen Zugriffsberechtigungen der Mastereinheit MA auf jene Slave-Einheit S1, S2, S3, S4 geprüft, auf welche von der Mastereinheit MA zugriffen werden soll.

Je nachdem in welchen vorgegebenen Adressbereich AD1, AD2, AD3 die Zugriffsadresse ZA der Mastereinheit MA fällt, wird dann in einem dritten Verfahrensschritt 3 die Zugriffsadresse ZA der Mastereinheit entweder unverändert an das Network-on-Chip-Bussystem NoC weitergereicht oder von der Modifikationseinheit MO der Speicherschutzeinheit MPU modifiziert. Soll beispielsweise die Mastereinheit MA schreibend und lesend auf eine Slave-Einheit S1, S2, S3, S4 zugreifen und wird die Zugriffsadresse ZA im ersten Adressbereich AD1 für volle bzw. schreibende und lesenden Zugriffe gefunden, so wird die Zugriffsadresse ZA im dritten Verfahrensschritt 3 unverändert an das Network-on-Chip-Bussystem NoC weitergeleitet. Vom Network-on-Chip-Bussystem NoC wird dann entsprechend der Zugriff an die Slave-Einheit S1, S2, S3, S4 weitervermittelt, auf welche von der Mastereinheit MA schreibend und lesend zugegriffen werden soll.

Wird von der Mastereinheit MA lesend auf eine Slave-Einheit S1, S2, S3, S4 zugriffen und ist die Mastereinheit MA dazu auch berechtigt, so wird im zweiten Verfahrensschritt 2 beim Vergleich der Zugriffsadresse ZA mit den vorgegebenen Adressbereichen AD1, AD2, AD3 von der Speicherschutzeinheit MPU ermittelt, dass die Zugriffsadresse in den zweiten Adressbereich für eingeschränkten bzw. nur lesenden Zugriff gelegen ist. Im dritten Verfahrensschritt 3 wird dann die Zugriffsadresse ZA der Mastereinheit MA unverändert an das Network-on-Chip-Bussystem NoC übertragen. Im Network-on-Chip-Bussystem wird dann im vierten Verfahrensschritt 4 anhand der Zugriffsadresse einen Adresse der entsprechenden Slave-Einheit S1, S2, S3, S4 ermittelt und der Zugriff der Mastereinheit MA an die Slave-Einheit S1, S2, S3, S4 weitergeleitet. Von der Mastereinheit MA kann dann der lesende Zugriff auf die Slave-Einheit S1, S2, S3, S4 durchgeführt werden.

Ist allerdings die Mastereinheit MA beispielsweise nur für eine lesenden Zugriff auf die Slave-Einheit S1, S2, S3, S4 berechtigt und versucht aber schreibend und lesend auf die Slave-Einheit S1, S2, S3, S4 zuzugreifen, so wird von der Speicherschutzeinheit MPU im zweiten Verfahrensschritt 2 festgestellt, dass die Zugriffsadresse ZA in den zweiten Adressbereich AD2 für nur lesende Zugriffe fällt und die Mastereinheit MA für einen vollen Zugriff (schreibend und lesend) nicht berechtigt ist. Im dritten Verfahrensschritt 3 wird dann von der Modifikationseinheit MO der Speicherschutzeinheit MPU die Zugriffsadresse ZA in eine modifizierte Zugriffsadresse mZA verändert. Die modifizierte Zugriffsadresse mZA wird dann an das Network-on-Chip-Bussystem NoC weitergeleitet. Da die modifizierte Zugriffsadresse mZA auf den im Network-on-Chip-Bussystem NoC unbenutzten Adressebereich nA abgebildet worden ist, wird dieser nicht berechtigte Zugriff der Mastereinheit MA im Network-on-Chip-Bussystem Noc im vierten Verfahrensschritt 4 beendet. Eine Beendigung des Zugriffs kann dann beispielsweise mittels eines so genannten Interrupts inklusive eines Indizien-Registers der Steuereinheit bzw. CPU des Ein-Chip-Systems mitgeteilt werden.

Analog wird vorgegangen, wenn z.B. von der Mastereinheit MA versucht wird, schreibend und lesend oder nur lesend auf eine gesperrte Slave-Einheit S1, S2, S3, S4 zuzugreifen. Anhand der Zugriffsadresse ZA der Mastereinheit MA wird von der Speicherschutzeinheit MPU im zweiten Verfahrensschritt 2 festgestellt, dass die Mastereinheit MA für keinen Zugriff auf die Slave-Einheit S1, S2, S3, S4 berechtigt ist. Die Zugriffsadresse ZA wird dabei im dritten Adressbereich AD3 für gesperrte Zugriffe gefunden. Im dritten Verfahrensschritt 3 wird dann die Zugriffsadresse ZA von der Modifikationseinheit MO der Speicherschutzeinheit MPU in die modifizierte Zugriffsadresse mZA geändert. Die modifizierte Zugriffsadresse mZA wird wieder an das Network-on-Chip-Bussystem NoC übertragen. Dort wird dann im vierten Verfahrensschritt 4 festgestellt, dass die modifizierte Zugriffsadresse mZA auf den unbenutzten Adressbereich nA des Network-on-Chip-Bussystems NoC verweist und der Zugriff der Mastereinheit MA beendet. Der CPU des Ein-Chip-Systems kann dies wieder mittels Interrupt mitgeteilt werden.

## Patentansprüche

1. Verfahren für kontrollierte Zugriffe durch zumindest eine Mastereinheit (MA) auf zumindest eine Slave-Einheit (S1, S2, S3, S4), insbesondere Speichereinheiten und/oder Ein-/Ausgabeeinheiten, über ein so genanntes Network-on-Chip-Bussystem (NoC) in einem Ein-Chip-System, wobei ein Zugriff der zumindest einen Mastereinheit (MA) auf die zumindest eine Slave-Einheit (S1, S2, S3, S4) über das Network-on-Chip-Bussystem (NoC) mittels einer Zugriffsadresse (ZA) durchgeführt wird, wobei zwischen der zumindest einen Mastereinheit (MA) und dem Network-on-Chip-Bussystem (NoC) eine Speicherschutzeinheit (MPU) integriert wird (1), wobei von der Speicherschutzeinheit (MPU) eine Zugriffsberechtigung der zumindest einen Mastereinheit (MA) auf die zumindest eine Slave-Einheit (S1, S2, S3, S4) durch Vergleich der Zugriffsadresse (ZA) mit vorgegebenen Adressbereichen (AD1, AD2, AD3) geprüft wird (2), **dadurch gekennzeichnet, dass** bei Identifikation eines unberechtigten Zugriffs der zumindest einen Mastereinheit (MA) die Zugriffsadresse (ZA) durch die Speicherschutzeinheit (MPU) derart modifiziert wird (3), dass dieser unberechtigte Zugriff im Network-on-Chip-Bussystem (NoC) beendet wird (4), wobei für unberechtigte Zugriffe der zumindest einen Mastereinheit (MA) die Zugriffsadresse (ZA) auf einen für diese Mastereinheit (MA) unbenutzten Adressbereich (nA) des Network-On-Chip-Bussystems (NoC) abgebildet wird.

2. Verfahren nach Anspruch 1, **dadurch gekennzeichnet, dass** bei einem unberechtigten Zugriff der zumindest einen Mastereinheit (MA), welcher im Network-on-Chip-Bussystem (NoC) terminiert wird (4), ein so genannter Interrupt ausgesendet wird.

3. Verfahren nach einem der Ansprüche 1 bis 2, **dadurch gekennzeichnet, dass** die zumindest eine Mastereinheit (MA) zumindest für Zugriffe zum Schreiben und/oder Lesen, für Zugriffe nur zum Lesen oder für keine Zugriffe auf die zumindest eine Slave-Einheit (S1, S2, S3, S4) berechtigt ist.

4. Verfahren nach einem der Ansprüche 1 bis 3, **dadurch gekennzeichnet, dass** die Adressbereiche (AD1, AD2, AD3) für den Vergleich mit der Zugriffsadresse (ZA) der zumindest einen Mastereinheit (MA) durch eine Sicherheitsanwendung eingestellt werden, und dann in einer Registereinheit (RE) der Speicherschutzeinheit (MPU) abgelegt werden.

5. Verfahren nach einem der Ansprüche 1 bis 4, **dadurch gekennzeichnet, dass** die Speicherschutzeinheit (MPU) in einer Initialisierungsphase über eine Registerschnittstelle (RS) durch eine spezielle vertrauenswürdige Konfigurationsmastereinheit konfiguriert wird.

6. Verfahren nach einem der Ansprüche 1 bis 4, **dadurch gekennzeichnet, dass** die in der Speicherschutzeinheit (MPU) abgelegten Adressbereiche (AD1, AD2, AD3) über eine Registerschnittstelle (RS) unter Verwendung von spezieller Verschlüsselungsinformation konfiguriert und/oder geändert werden.

7. Schaltanordnung für kontrollierte Zugriffe in einem so genanntes Ein-Chip-System zur Durchführung des erfindungsgemäßen Verfahrens nach den Ansprüchen 1 bis 6 bestehend aus zumindest einer Mastereinheit (MA), zumindest einer Slave-Einheit (S1, S2, S3, S4) und einem so genanntem Network-on-Chip-Bussystem (NoC) für eine Verbindung der zumindest einen Mastereinheit (MA) und der zumindest einen Slave-Einheit (S1, S2, S3, S4), wobei zwischen der zumindest eine Mastereinheit (MA) und dem Network-on-Chip-Bussystem (NoC) eine Speicherschutzeinheit (MPU) integriert ist, welche zum Überprüfen von Zugriffen durch Vergleich von Zugriffsadressen (ZA) mit vorgegebenen Adressbereichen (AD1, AD2, AD3) sowie zum Modifizieren von Zugriffsadressen (ZA) bei unberechtigten Zugriffen auf die zumindest eine Slave-Einheit (S1, S2, S3, S4) durch die zumindest eine Mastereinheit (MA) derart ausgestaltet ist, dass diese unberechtigten Zugriffe im Network-on-Chip-Bussystem (NoC) beendet werden, und dass für unberechtigte Zugriffe der zumindest einen Mastereinheit die Zugriffsadresse auf einen für diese Mastereinheit unbenutzten Adressbereich des Network-On-Chip-Bussystems abgebildet wird.

8. Schaltanordnung nach Anspruch 7, wobei die Speicherschutzeinheit (MPU) zumindest eine Kontrolllogik (KL) für eine Prüfung von Zugriffsadressen (ZA), eine Modifikationseinheit (MO) für eine Zugriffsadressmodifikation sowie zumindest eine Registereinheit (RE) für ein Ablegen der vorgegebenen Adressbereiche (AD1, AD2, AD3) aufweist.

9. Schaltanordnung nach einem der Ansprüche 7 bis 8, wobei die zumindest eine Registereinheit (RE) der Speicherschutzeinheit (MPU) über eine Registerschnittstelle (RS) konfigurierbar ist.

## Claims

1. Method for controlled accesses by at least one master unit (MA) to at least one slave unit (S1, S2, S3, S4), in particular memory units and/or input/output units, via a so-called network-on-chip bus system (NoC) in a system on chip, wherein an access of the at least one master unit (MA) to the at least one slave unit (S1, S2, S3, S4) via the network-on-chip bus system (NoC) is performed by means of an access address (ZA), wherein a memory protection unit (MPU) is integrated (1) between the at least one master unit (MA) and the network-on-chip bus system (NoC), wherein an access authorisation of the at least one master unit (MA) to the at least one slave unit (S1, S2, S3, S4) is checked (2) by the memory protection unit (MPU) by comparing the access address (ZA) with specified address sections (AD1, AD2, AD3), **characterised in that** if an unauthorised access of the at least one master unit (MA) is identified, the access address (ZA) is modified (3) by the memory protection unit (MPU) such that this unauthorised access is terminated (4) in the network-on-chip bus system (NoC), wherein in the case of unauthorised accesses of the at least one master unit (MA), the access address (ZA) is mapped onto (4) an address section (nA) of the network-on-chip bus system (NoC), said address section (nA) being unused for this master unit (MA).

2. Method according to claim 1, **characterised in that** in the case of an unauthorised access of the at least one master unit (MA), said access being terminated (4) in the network-on-chip bus system (NoC), a so-called interrupt is transmitted.

3. Method according to one of claims 1 to 2, **characterised in that** the at least one master unit (MA) is authorised at least for write and/or read access, for read-only access or for no access to the at least one slave unit (S1, S2, S3, S4).

4. Method according to one of claims 1 to 3, **characterised in that** the address sections (AD1, AD2, AD3) for the comparison with the access address (ZA) of the at least one master unit (MA) are set by a security application and then stored in a register unit (RE) of the memory protection unit (MPU).

5. Method according to one of claims 1 to 4, **characterised in that** the memory protection unit (MPU) is configured by a specific trusted master configuration unit via a register interface (RS) during an initialisation phase.

6. Method according to one of claims 1 to 4, **characterised in that** the address sections (AD1, AD2, AD3) stored in the memory protection unit (MPU) are configured and/or changed via a register interface (RS) using specific encryption information.

7. Circuit arrangement for controlled accesses in a so-called system on chip for performing the inventive method according to claims 1 to 6, consisting of at least one master unit (MA), at least one slave unit (S1, S2, S3, S4), and a so-called network-on-chip bus system (NoC) for connecting the at least one master unit (MA) and the at least one slave unit (S1, S2, S3, S4), wherein a memory protection unit (MPU) is integrated between the at least one master unit (MA) and the network-on-chip bus system (NoC), and is designed to check accesses by comparing access addresses (ZA) with specified address sections (AD1, AD2, AD3) and to modify access addresses (ZA) in the case of unauthorised accesses to the at least one slave unit (S1, S2, S3, S4) by the at least one master unit (MA), such that these unauthorised accesses are terminated in the network-on-chip bus system (NoC), and that in the case of unauthorised accesses of the at least one master unit, the access address is mapped onto an address section of the network-on-chip bus system, said address section being unused for this master unit.

8. Circuit arrangement according to claim 7, wherein the memory protection unit (MPU) has at least one control logic (KL) for checking access addresses (ZA), a modification unit (MO) for modifying access addresses, and at least one register unit (RE) for storing the specified address sections (AD1, AD2, AD3).

9. Circuit arrangement according to one of claims 7 to 8, **characterised in that** the at least one register unit (RE) of the memory protection unit (MPU) can be configured via a register interface (RS).

## Revendications

1. Procédé pour des accès contrôlés par au moins une unité maître (MA) à au moins une unité esclave (S1, S2, S3, S4), et plus particulièrement des unités de mémoire et/ou des unités d'entrée/de sortie, via ce qu'il est convenu d'appeler un système de bus réseau sur puce (NoC) dans un système monopuce, un accès de l'au moins une unité maître (MA) à l'au moins une unité esclave (S1, S2, S3, S4) étant effectué via le système de bus réseau sur puce (NoC) au moyen d'une adresse d'accès (ZA), entre l'au moins une unité maître (MA) et le système de bus réseau sur puce (NoC) étant intégrée une unité de protection de mémoire (MPU), l'unité de protection de mémoire (MPU) vérifiant une autorisation d'accès de l'au moins une unité maître (MA) à l'au moins une unité esclave (S1, S2, S3, S4) par comparaison de l'adresse d'accès (ZA) avec des zones d'adresses données (AD1, AD2, AD3), **caractérisé en ce que**, en cas d'identification d'un accès non autorisé de l'au moins une unité maître (MA), l'adresse d'accès (ZA) est modifiée par l'unité de protection de mémoire (MPU) de manière telle qu'il est mis fin (4) à cet accès non autorisé dans le système de bus réseau sur puce (NoC), l'adresse d'accès (ZA) étant, pour des accès non autorisés de l'au moins une unité maître (MA), reproduite sur une zone d'adresses (nA) du système de bus réseau sur puce (NoC) non utilisée pour cette unité maître (MA) .

2. Procédé selon la revendication 1, **caractérisé en ce qu'**est émise ce qu'il est convenu d'appeler interrupt en cas d'accès non autorisé de l'au moins une unité maître (MA) auquel il est mis fin (4) dans le système de bus réseau sur puce (NoC).

3. Procédé selon l'une des revendications 1 à 2, **caractérisé en ce que** l'au moins une unité maître (MA) est autorisée pour des accès en écriture et/ou en lecture, pour des accès en lecture seule ou n'est autorisée pour aucun accès à l'au moins une unité esclave (S1, S2, S3, S4).

4. Procédé selon l'une des revendications 1 à 3, **caractérisé en ce que** les zones d'adresses (AD1, AD2, AD3) sont paramétrées par une application de sécurité pour la comparaison avec l'adresse d'accès (ZA) de l'au moins une unité maître (MA), puis sont déposées dans une unité de registre (RE) de l'unité de protection de mémoire (MPU).

5. Procédé selon l'une des revendications 1 à 4, **caractérisé en ce que** l'unité de protection de mémoire (MPU) est configurée dans une phase d'initialisation via une interface de registre (RS) par une unité maître de configuration spéciale fiable.

6. Procédé selon l'une des revendications 1 à 4, **caractérisé en ce que** les zones d'adresses (AD1, AD2, AD3) déposées dans l'unité de protection de mémoire (MPU) sont configurées et/ou modifiées via une interface de registre (RS) en utilisant une information de cryptage spéciale.

7. Circuit pour des accès contrôlés dans ce qu'il est convenu d'appeler un système monopuce pour exécuter le procédé de l'invention selon les revendications 1 à 6, composé d'au moins une unité maître (MA), d'au moins une unité esclave (S1, S2, S3, S4) et de ce qu'il est convenu d'appeler un système de bus réseau sur puce (NoC) pour une connexion de l'au moins une unité maître (MA) et de l'au moins une unité esclave (S1, S2, S3, S4), entre l'au moins une unité maître (MA) et le système de bus réseau sur puce (NoC) étant intégrée une unité de protection de mémoire (MPU) qui est conçue, pour vérifier des accès par comparaison d'adresses d'accès (ZA) avec des zones d'adresses données (AD1, AD2, AD3) et pour modifier des adresses d'accès (ZA) en cas d'accès non autorisés par l'au moins une unité maître (MA) à l'au moins une unité esclave (S1, S2, S3, S4), de manière telle qu'il est mis fin à ces accès non autorisés dans le système de bus réseau sur puce (NoC) et que l'adresse d'accès est, pour des accès non autorisés de l'au moins une unité maître, reproduite sur une zone d'adresses du système de bus réseau sur puce non utilisée pour cette unité maître.

8. Circuit selon la revendication 7, l'unité de protection de mémoire (MPU) comportant au moins une logique de contrôle (KL) pour une vérification d'adresses d'accès (ZA), une unité de modification (MO) pour une modification d'adresse d'accès et au moins une unité de registre (RE) pour déposer les zones d'adresses données (AD1, AD2, AD3).

9. Circuit selon l'une des revendications 7 à 8, l'au moins une unité de registre (RE) de l'unité de protection de mémoire (MPU) pouvant être configurée via une interface de registre (RS) .
